(19)

Europäisches
Patentamt

European
Patent Office

Office européen
des brevets

(11) **EP 2 236 208 A1**

(12) **EUROPEAN PATENT APPLICATION**

(43) Date of publication:
**06.10.2010 Bulletin 2010/40**

(51) Int Cl.:
*B01L 3/04* (2006.01)    *B01D 59/44* (2006.01)
*F27B 17/02* (2006.01)    *G01N 30/88* (2006.01)
*H01J 49/04* (2006.01)

(21) Application number: **09425129.5**

(22) Date of filing: **03.04.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(71) Applicants:
• **Università degli Studi di Parma**
  **43100 Parma (IT)**
• **Thermo Fisher Scientific (Delft), B.V.**
  **2627 BC Delft (NL)**

(72) Inventors:
• **Boschetti, Tiziano**
  **47030 San Mauro Pascoli (Forli-Cesena) (IT)**
• **Iacumin, Paola**
  **43017 San Secondo (Parma) (IT)**
• **Gaia, Daniele**
  **15044 Quargnento (Alessandria) (IT)**
• **Ortona, Alberto**
  **6949 Comano (CH)**

(74) Representative: **Lunati & Mazzoni S.r.L.**
  **Via Carlo Pisacane, 36**
  **20129 Milano (IT)**

(54)    **Reactor device for chemical and isotopic analyses**

(57)    A reactor device (1) is provided, for chemical analysis on a sample (32) designed to be connected to a distributor (31) of samples (32) and to an analytical system (39) suitable for performing said chemical analyses, comprising: a carbon reactor element (2) defining an internal volume (2a), including a carbon crucible (3) suitable for containing said sample (32), a heating element (4) arranged on the outside of said reactor element (2) suitable for bringing the crucible (3) up to temperatures designed to enable the reaction of the carbon with the element being analysed and forming part of the sample (32), so as to obtain an analytical gas, and wherein the reactor element (2) comprises a substrate (20), in contact with the internal volume (2a), and a protective layer (21) made of a ceramic material, suitable for at least partially covering said substrate (20) and for providing a protective barrier for said substrate (20) against atmospheric degradation in high temperature conditions.

Fig. 1

EP 2 236 208 A1

**Description**

The present invention relates to a reactor for chemical and isotopic analyses, e.g. for isotopic and elementary analyses, of the type specified in the preamble of the main claim.

Several types, procedures and apparatuses are currently known for performing various chemical and isotopic analyses, such as isotopic and elementary analyses, for instance.

In particular, the isotopic analysis of oxygen is done by measuring the abundance ratio R between the isotopes $^{18}O$ and $^{16}O$ of the oxygen in a given chemical compound, where $R = {^{18}O}/{^{16}O}$.

The isotopic composition of a given compound is generally expressed with the notation $\delta$ (delta) that expresses the difference between the isotopic ratio R in the compound and said ratio in a standard of known composition:

$$\delta = [(Rsample - Rstandard) / Rstandard] \times 1000.$$

The parameter $\delta^{18}O$ is determined for various purposes in different branches of the sciences, e.g. in geology, the forensic sciences, climatology, and so on.

For said purposes, isotopic analyses are conducted on organic and inorganic substances.

To perform said analyses, a very rapid and effective procedure has been developed since the 90s, based on carbothermal reduction.

According to this principle, using specific elementary analysers, the organic or inorganic compound being analysed is made to react with carbon at high temperatures inside a reactor so as to produce carbon oxide (CO) as the analytical gas.

By means of a continuous flow of inert gas (called the carrier gas and usually consisting of helium), the carbon oxide thus obtained is transferred from the reactor to a chromatographic column for its separation from any other gaseous components of elements contained in the compound, or developing as a result of the reduction reaction, and from there to mass spectrometers of known type for the analysis of the abundance ratio and of the delta composition of the compound.

The purpose of elementary analyses, on the other hand, is to qualitatively and quantitatively determine the elements contained in a substance. These analyses are conducted using analysers entirely similar to those used for isotopic analyses, i.e. they consist of a reactor and a gas chromatographic column, in which the elements of interest in the form of a gas, obtained by the reactor and separated by the gas chromatographic column, are identified by means of suitable instruments, such as a TCD (thermal conductivity detector) or the like.

For said analyses, reactors have been developed that consist of a tubular element in which the analytical gas, and carbon oxide and hydrogen in particular, is formed, connected at one end to a device that delivers the samples to analyse (or autosampler) and at the other end to the gas chromatographic column, and subsequently to the instrument for detecting the analytical gas (a TCD or a mass spectrometer, or both).

In the case of isotopic analyses, the method is known internationally by the name of "continuous flow - isotopic ratio mass spectrometry (CF-IRMS)" or, more simply, as the "on-line" method because, thanks to the continuous flow of helium, the sample gas is obtained and the isotopic analysis of the oxygen or other elements is done in rapid succession and demands a minimal involvement on the part of the operator.

One of the reactors of known type, for instance, comprises a tube made of refractory ceramic material containing alumina ($Al_2O_3$), such as mullite ($3Al_2O_3*2SiO_2$), that can be connected to the sample distributor and to the isotope measuring apparatus; said tube contains another, glassy carbon tube that is filled to approximately half its height with a plurality of glassy carbon elements, which serve the dual purpose of providing support for the portion of sample to analyse in the area reaching the highest temperature, and also of providing the carbon for the reaction, together with the internal tube.

The sample to analyse is then brought up to a high temperature, coming between approximately 1300°C and 1450°C, by means of an electrical heating element, usually made of silicon carbide (SiC), so that the oxygen contained in the sample reacts entirely with the glassy carbon and is thereby converted into carbon oxide.

The carbon oxide thus obtained is then driven by the inert carrier gas flow through the reactor, and from there to the gas chromatographic column and to the apparatus for measuring its isotopic composition.

In particular, the refractory tube inside said reactor serves the purpose of isolating the glassy carbon tube from the outside environment. The glassy carbon is unstable if it is exposed to air at the stated temperatures, in that it tends to become oxidised already at temperatures exceeding 450-500°C, producing carbon dioxide ($CO_2$) and carbon oxide.

The above-described type of reactor has several drawbacks.

These drawbacks relate to the very closely juxtaposed position of the tube made of ceramic material and the inner tube made of glassy carbon. In fact, at temperatures in excess of 1350°C and without introducing any samples, a background signal of carbon oxide proportional to the temperature is generated. This formation of unwanted carbon oxide is related to the well-known phenomenon of oxygen autodiffusion in alumina and silicon, and to the subsequent reaction of said oxygen, coming from the outer tube, with the carbon provided by the inner tube.

The above-described process is consistent with the signs on the two reaction tubes after the analyses, which consist of the formation of glassy areas in the outer, mullite tube and alterations on the outer surface of the internal glassy carbon tube, consisting of inclusions or surface deposits containing aluminium.

To overcome said problem, reactor devices have been designed that consist of a single silicone carbide (SiC) tube. The silicone carbide tends to be oxidised by the carbon oxide, however, according to the reaction:

$$SiC(s) + 2CO(g) \rightarrow SiO_2(s) + 3C(s).$$

The chemical reaction indicated proceeds, in fact, from left to right, at the working temperatures typical of the isotopic analyses, and at least up to 1515°C, a temperature at which a thermodynamic equilibrium is reached. The production of silica and its crystalline phases (e.g. crystobalite) subtracts the carbon oxide to analyse, with a consequent isotopic fractionation and interference with the results not only of the sample currently being analysed, but also of subsequent samples (due to cross contamination), since the silica continues to remain in the reactor because of its high melting point.

Another common drawback of the currently marketed reactor devices lies in the maximum limit of the analytical temperatures. A silicon carbide (SiC) electric resistor is generally used as the heating element, which allows for normal working temperatures of 1400-1450°C to be used, and even temperatures of around 1550-1600°C to be reached, but at the expense of the heating element's durability, because of the known ageing phenomenon.

An alternative that enables the problems to be solved consists in the use of the reactor described in the patent application EP-A-2031387, presented by the same applicant, but this solution may prove rather costly.

Another alternative to the on-line methods, specific for inorganic compounds that decompose at high temperatures, consists in using off-line methods based on fluorination techniques or other halogens. These may carry risks for operator health and safety, however, due to the use of halogen reagents containing acid gases. In any case, they are not as rapid and practical to use as the on-line methods.

Given this situation, the technical aim behind the present invention is to design a reactor for chemical and isotopic analyses that is substantially capable of overcoming the above-mentioned drawbacks.

Within said technical aim, an important object of the invention is to produce a reactor for chemical and isotopic analyses that is capable of performing on-line analyses and providing a substantially reliable measurement, uninfluenced by any internal chemical/isotopic reactions that might alter the quantitative output and/or the composition of the carbon oxide being analysed. Another important object of the invention is to obtain a reactor for use in chemical and isotopic analyses that has a high performance and a long working life.

Another important object of the invention is to obtain a reactor for use in chemical and isotopic analysis that is simple to use and inexpensive.

The technical aim and the above-stated objects are achieved by a reactor for use in chemical and isotopic analyses as claimed in the attached Claim 1.

Preferred embodiments are illustrated in the dependent claims.

Further characteristics and advantages of the invention are clarified below in a detailed description of a preferred embodiment of the invention with reference to the attached drawings, wherein:

**Fig. 1** shows a reactor for chemical and isotopic analyses according to the invention;

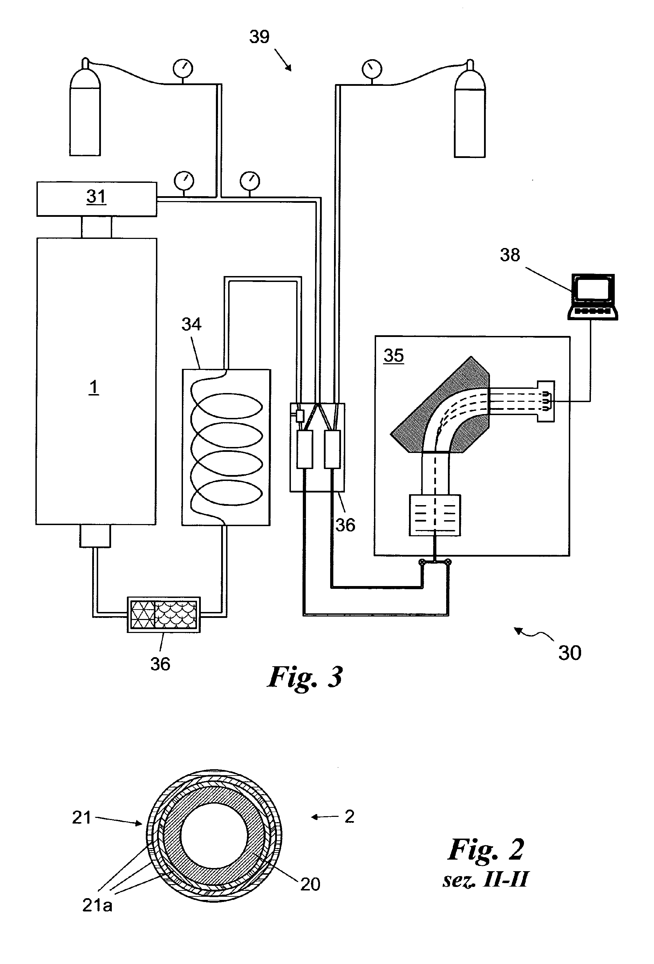

**Fig. 2** is a cross-sectional view along II-I of Fig. 1; and
**Fig. 3** shows an apparatus for chemical and isotopic analyses that includes the reactor device according to the invention.

With reference to the above-mentioned figures, the reactor device 1 according to the invention is globally indicated by the numeral **1.**

It is suitable for being included in an analyser apparatus **30,** and particularly in an apparatus for measuring isotopes suitable for measuring the isotopic ratio of oxygen $\delta^{18}O$, or in an elementary analysis system.

The apparatus 30 comprises a sample distributor **31,** also called an autosampler, of known type, for solids or liquids and of standard dimensions, suitable for enabling the delivery of samples of material **32** inside the apparatus 30.

In particular, the samples of material 32 may consist of organic or inorganic materials in a solid or liquid state.

The solid or viscous liquid samples **32** are inserted inside a resealable capsule **33,** of known type, especially made of silver or nickel with a high grade of purity.

The apparatus 30 also comprises the reactor device 1 according to the invention, suitable for binding the oxygen contained inside the sample 32 to carbon, to give rise to carbon oxide according to the generic reaction:

$$MxOy (s,l,g) + yC(s) \rightarrow xM(s,l,g) + yCO(g)$$

where M is a generic element. For instance, the analysis of water can generate both hydrogen (H2) and carbon oxide (CO) as analytical gases according to the following reaction:

$$H_2O\ (l) + C\ (s) \rightarrow H_2\ (g) + CO\ (g)$$

Alternatively, different chemical reactions can be developed inside the reactor device 1, but always linked to the development of reactions with carbon and used for elementary analyses or other types of analysis.

The apparatus 30 also comprises a gas molecule separator **34,** preferably consisting of a gas chromatographic column of known type, such as a molecular sieve column, suitable for dividing and selecting the different molecules of gas coming from the reactor device 1 and sending the carbon oxide to a mass spectrometer **35,** suitable for measuring the isotopic composition of said particles of carbon oxide and consequently the isotopic ratio of the oxygen $\delta^{18}O$.

The apparatus 30 may also comprise further devices suitable for facilitating and improving the chemical and isotopic analyses.

For instance, between the reactor device 1 and the gas separator system 35, a gas trap **36,** e.g. for halogens, of known type may be installed, comprising for instance magnesium perchlorate / sodium hydroxide or anhydrone/ascarite® and inert to the gases CO, $N_2$ and $H_2$.

Moreover, there may be a conveyor device **37,** again of known type. Said device 37 may be, for instance, of the type described in Brand & Habfast (DE4333208-A1 or GB2273561-A), or in the article published by Werner et al. in Rapid Communication in Mass Spectrometry, vol. 13, 1999, pages 1237-1241. It has the dual purpose of reducing the gas flow towards the mass spectrometer 35, and of conveying one or more standard gases, e.g. $H_2$, in addition to the CO, to the same mass spectrometer 35 for comparative measurements on the sample gas in terms of both signal and isotopic ratio.

In addition, between the gas molecule separator 34 and the conveyor device 37, a detector for elementary analyses (not shown) may be installed, such as a TCD (thermal conductivity detector) or the like.

Finally, the apparatus 30 comprises an electronic processor **38** designed to display the results of the measurements and to operate the apparatus 30, and preferably also the reactor device 1.

Said gas molecule separator 34, mass spectrometer 35, gas trap 36, conveyor device 37 and electronic processor 38 are globally described herein as the analytical system **39,** and consist of elements of known type, with standard characteristics and dimensions.

As stated previously, the reactor device 1 for isotopic analyses is suitable for decomposing the sample 32 by means of a carbothermal reduction, transforming the elements it contains into suitable analytical gases. In particular, the oxygen contained in the sample reacts with the carbon to give rise to carbon oxide gas; another analytical gas may be any hydrogen ($H_2$), for instance, contained in the sample. These gases are subsequently measured by the analytical system 39.

Said reactions take place inside a reactor element **2**, which is a part of the reactor device 1, that has an internal volume **2a.**

The reactor element 2 is suitably tubular and cylindrical, with globally standard dimensions; the external and internal diameters is comprised, for instance, between 15 and 30 mm, and between 7 and 15 mm, respectively, and in any case are such as to ensure a thickness coming between 4 and 10 mm. The length is around a few dozen centimetres, e.g. comprised between 45 and 50 cm.

The element 2 consists of a substrate **20,** and an external protective layer **21,** which in turn comprises one or more layers **21a.**

The substrate 20 consists of carbon, preferably in the allotropic forms of graphite or glassy carbon, or any low-porosity variants thereof (pyrolytic graphite, carbon-carbon composites, possibly made impermeable to gases, etc.), and has a thickness ranging, for instance, between 2 mm and 5 mm.

The protective layer 21 is made of a ceramic material and advantageously of silicon carbide (SiC), and it has a thickness that preferably ranges between 0.1 mm and 4 mm.

The protective layer 21 is designed to serve as a protective barrier so that the external atmosphere does not interact with the substrate 20, or at least so as to prevent its degradation at the working temperatures. The term *degradation* is used here to mean various reactions, such as oxidation or the like.

The layer 21 extends in height to approximately 50%-100% of the height of the reactor element 2, or so as to cover the part exposed to the highest temperatures.

The protective layer 21 is preferably made by means of the so-called "tape-casting" technique, in itself known, as described briefly below.

This technique involves the preparation of a plurality of flexible silicon carbide tapes starting from a compound called "slurry"; the SiC tapes obtained are subsequently wrapped onto the substrate 20 and sintered by means of suitable heat treatments.

The starting slurry mainly contains SiC powder, solvents such as ethanol, butanol and tetrachloroethylene, binders such as butyral, antifoaming additives and elasticizers and sintering adjuvants such as boron and carbon.

The slurry is deposited by means of a special machine, called a "tape casting device", on a backing sheet that is preferably made of a material known by the brand name of Mylar®, to produce a tape that usually has a thickness ranging between 0.4 mm and 1 mm.

The backing sheet is subsequently removed after the solvent has been slowly eliminated by means of a controlled evaporation process, e.g. at approximately 60°C for 24-48h.

Then the tape is cut to a suitable size and adapted to the substrate 20, possibly with the further addition of binders so as to facilitate its adhesion.

Heat treatments are subsequently applied in an inert atmosphere: the first at 500°C-1000°C, during which there is a decomposition of said binders; and the second at 2100-2200°C for the sintering of the tape and the consequent formation of the protective layer 21. A protective layer 21 is thus prepared, that can preferably in turn consist of several layers 21 a, by repeating the above-described procedure several times, i.e. by applying several SiC tapes to the substrate 20.

Alternatively, the protective layer 21 can be made by means of known depositing and sintering methods in a high vacuum, such as CVD (chemical vapour deposition), CVI ( chemical vapour injection), or the like.

A crucible 3, made of carbon, and of glassy carbon or graphite in particular, and designed to contain the sample 32, is placed inside the reactor element 2.

Said crucible 3 preferably has an external cylindrical shape with a narrower diameter than the internal diameter of the reactor element 2, a closed underside and an open upper side, suitable for enabling the insertion in the crucible 3 of samples 32 and the outflow of carbon oxide gas or other gases after the above-described generic chemical reaction has been completed. The sloping inside walls of the crucible convergence towards the bottom of said crucible so as to make a greater quantity of carbon available for the reaction and facilitate its cleaning.

The crucible 3 preferably rests on special supporting means **9,** consisting of chips of glassy carbon or the like, suitable for filling the lower half of the tube 2.

The device 1 also comprises a heating element **4,** arranged on the outside of the tube 2 and designed to heat the crucible 3, and the sample 32 contained in the crucible in particular, to the temperatures at which the carbon reacts with the oxygen contained in the sample 32 to form the carbon oxide that has to be measured.

To facilitate said reaction, glassy carbon powder, which has a high specific reaction surface, may be placed in the crucible 3, or directly inside the capsule 33 containing the sample, or catalysts of other type may be used.

The heating element 4 preferably comprises one or more electrical resistors, made of molybdenum disilicide ($MoSi_2$), exposed to the outside atmosphere, through which an electric current passes so as to heat the crucible 3, due to the Joule effect (also called ohmic heating), to temperatures in excess of 1325°C, and preferably nearing 1600°C, so as to develop a quantitatively complete reaction to convert the oxygen contained in the substance being analysed into carbon oxide, or any other reactions required.

In the vicinity of the heating element 4, there is preferably a temperature control, preferably consisting of a thermocouple with a microprocessor, in itself of known type and suitable for measuring and maintaining the required temperature on a level with the crucible 3.

The reactor device 1 also comprises a container 7 made of a refractory material, and preferably consisting of a compound containing alumina $Al_2O_3$ or zirconia $ZrO_2$, including a suitable holder for the heating element 4, and at least a part of the reactor element 2, and preferably the central portion of the latter, in the vicinity of which no high-temperature chemical reactions take place.

This container 7 is also suitably covered with a stainless steel wall **8.**

The reactor element 2 is preferably connected directly to the sample distributor 31 and to the analytical system 39 by means of two connection devices **5.**

The connection devices 5 comprise an internal channel **6,** in communication for the passage of a fluid with the internal volume **2a** of the reactor element 2.

The internal channels 6 and the internal volume 2a of the reactor element 2 are also preferably gastight, so as to avoid any losses of analytical gas or unwanted contributions from the outside atmosphere.

Each connection device 5 consequently comprises sealing elements, such as screw couplings with static gaskets made of plastic (e.g. a perfluorate elastomer or other polymer capable of withstanding high temperatures) or metal (e.g. stainless steel or another alloy resistant to high temperatures) suitable for ensuring a gastight connection. An entirely similar connection is used in the lower portion.

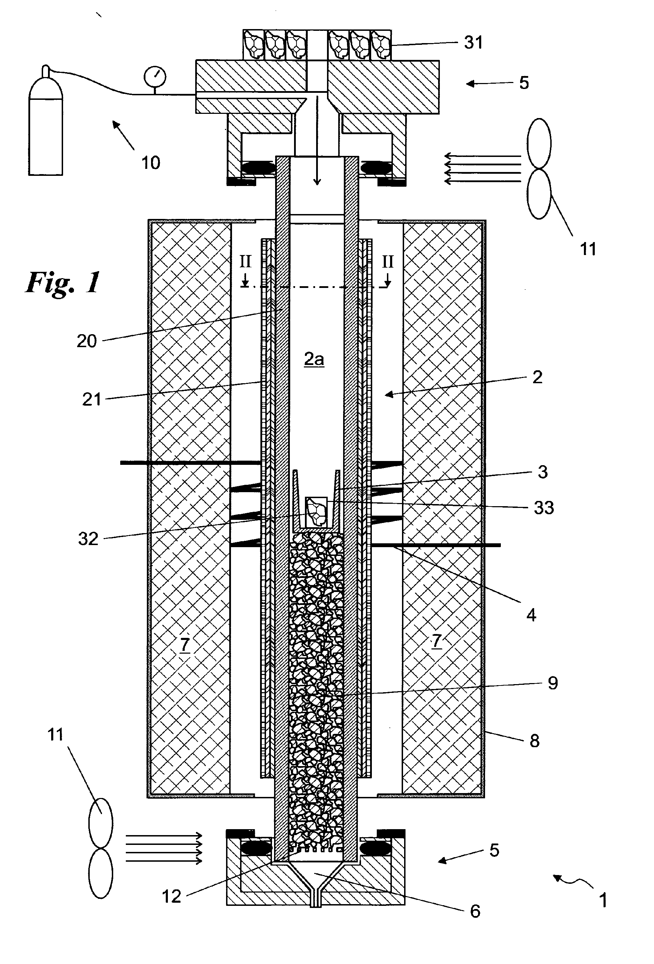

The reactor device 1 also includes two inert gas carrier means **10,** a suitable gas being helium (He), in the internal volume 2a, and suitably connected to one of the connection devices 5 (by way of example,' Fig. 1 shows the carrier means 10 in the vicinity of the upper connection device 5).

These means advantageously consist of a high-pressure inert gas bottle. The inert gas inlet in the reactor element 2, is controlled by a pressure gauge or flow meter so that it can be adjusted to approximately 1 bar or 40-100 ml per minute, respectively, during the analysis.

The same carrier means 10 are designed to maintain an inert gas atmosphere inside the reactor element 2 and to carry the carbon oxide gas, or other gases, through the same reactor element 2 to the analytical system 39.

Coinciding with the connection devices 5, there are also heat dissipators **11,** consisting of fans or the like, designed to cool the devices 5, and the reactor element 2.

Finally, the device 1 comprises a stand **12** for the supporting means 9, designed to support said element, allowing for the passage of gas and inert to the carbon oxide (e.g. silver wool).

The operation of the reactor device 1, described above in structural terms, is as follows.

To undertake a chemical analysis, and particularly an isotopic analysis of the oxygen contained in an organic or inorganic substance, a portion of known dimensions and weight or volume of said substance is first obtained. In the case of liquid substances, the predetermined volume may be injected manually or by means of a specific sample distributor for fluids, also called a liquid autosampler, with an adequate gas-tight coupling to the reactor element 2.

In the case of solids or viscous liquids, the portion of substance forming the sample 32 is placed in a silver or nickel capsule 33.

In some cases, the samples 32 are ground to form a powder and mixed with glassy carbon powder and/or other catalysts to obtain a faster or more complete reaction in the case even samples consisting of refractory inorganic compounds.

The capsule 33 containing the sample 32 is then manually inserted in the sample distributor 31.

The capsule 33 is then delivered by the distributor 31 into the crucible 3, dropped by gravity through the internal volume 2a of the reactor element 2.

The temperature is higher in this area, due to the heating elements 4, and this is where the required reactions take place.

The metal comprising the capsule 33 is then melted and collected in the crucible, leaving the sample 32 to react and degrade at the high temperatures.

In detail, the capsule 33 does not interact with the sample 32 because it consists of a noble metal, or any case one that does not react with the sample 32.

The sample 32 reacts instead with the glassy carbon of the crucible 3, or the carbon powder contained therein.

In particular, the previously-described generic reaction takes place and carbon oxide gas forms, which emerges from the upper side of the crucible 3 and is carried by the inert gas flow towards the bottom of the tube 2, i.e. through the supporting means 9, to reach the analytical system 39.

Along the way, the carbon oxide does not bind with potentially reactive elements. In fact, in areas at high temperatures it only comes into contact with glassy carbon elements or non-reacting materials.

At the same time, the protective layer 21 on the reactor element 2 isolates the substrate 20 from various reactions with the atmosphere of the outside environment, and consequently with various gases, even at high temperatures, i.e. nearing 1600°C.

In fact, the protective layer 21 is scarcely reactive; in particular, only the layers of SiC in the coating nearest to the outside interact with the oxygen in the atmosphere, forming $CO_2$ and CO gases, which are dispersed in the outside environment, and solid $SiO_2$, which avoids any subsequent propagation of the atmospheric oxygen inside the underlying layers and in the substrate.

The invention offers important advantages.

In fact, thanks to the absence of any unwanted contributions of oxygen or carbon oxide coming from substances other than the sample 32, the isotopic analyses of the oxygen are precise and correct.

It is therefore possible to achieve rapid isotopic on-line analyses with a good level of precision.

Moreover, the reactor device 1, since it has a reactor element 2 of suitable dimensions and designed to be compatible with the fittings that can be connected to the sample distributor 31, and to the measuring system 39, it can be used with systems of known type.

Said reactor device 1 also makes it possible to conduct analyses at a higher reaction temperature, enabling more rapid reaction kinetics, better quantitative returns of analytical gas, and the analysis of refractory inorganic compounds.

The reactor device 1 also has a greater durability since, despite the analytical temperatures being potentially higher, both the reactor element 2 and the heating element 4 are less sensitive to thermal shocks.

In addition to reducing both the costs of consumables and the assembly problems relating to the presence of two tubes, the presence of a single tube increases the internal volume 2a of the reaction tube 2, and consequently also the volume of the crucible 3, thus enabling the analysis of a larger number of samples.

**Claims**

1.  A reactor device (1) for chemical and isotopic analyses on a sample (32), suitable for being connected to a distributor (31) of samples (32) and to an analytical system (39) suitable for performing said chemical analyses, comprising: a carbon reactor element (2) defining an internal volume (2a), including a carbon crucible (3) suitable for containing said sample (32), a heating element (4) placed around the outside of said reactor element (2) suitable for bringing said crucible (3) up to temperatures designed to enable the reaction of the carbon with the element being analysed and forming a part of said sample (32), so as to produce an analytical gas, **characterised in that** said reactor element (2) comprises a substrate (20) in contact with said internal volume (2a), and a protective layer (21) made of a ceramic material designed to externally at least partially cover said substrate (20) so as to provide a protective barrier for said substrate (20) against any atmospheric degradation in high temperature conditions.

2.  A reactor device according to claim 1, wherein said protective layer (21) comprises a plurality of successive layers (21 a).

3.  A reactor device according to claim 1, wherein said protective layer (21) is substantially made of silicon carbide.

4.  A reactor device according to claim 3, wherein said protective layer (21) is obtained by tape-casting.

5.  A reactor device according to claim 1 or 2, wherein said protective layer (21) is obtained by means of deposition and sintering techniques in a high vacuum.

6.  A reactor device according to any of the previous claims, wherein said protective layer (21) has a thickness coming between 0.1 mm and 4 mm.

7.  A reactor device according to one or more of the previous claims, wherein said heating element (4) is an electrical resistor made of molybdenum disilicide.

8.  A reactor device according to one or more of the previous claims, wherein said reactor element (2) can be connected directly to said sample distributor (31) and to said analytical system (39).

9.  An analyser apparatus (30), for chemical and isotopic analyses comprising: a sample distributor (31) suitable for enabling the loading of samples of material (32) inside said apparatus (30), a reactor device (1) according to one or more of the previous claims, designed to obtain an analytical gas, and an analytical system (39) for analysing said analytical gas.

10. An analyser apparatus (30) according to claim 9, suitable for measuring the isotopic ratio $\delta^{18}O$ of said samples of material (32).

11. An analyser apparatus (30) according to claim 9, suitable for performing elementary analyses on said samples of material (32).

12. A procedure for manufacturing a reactor device (1) according to one or more of the claims 1-3, **characterised in that** it comprises a phase involving the preparation of said protective layer (21) by means of tape-casting.

*Fig. 1*

39

38

31

34

1

36

36

35

30

*Fig. 3*

21

21a

2

20

*Fig. 2*
*sez. II-II*

Europäisches
Patentamt
European
Patent Office
Office européen
des brevets

**EUROPEAN SEARCH REPORT**

Application Number

EP 09 42 5129

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | DE 198 16 348 C1 (UFZ LEIPZIGHALLE GMBH [DE]) 5 August 1999 (1999-08-05) * column 2, line 43 - column 4, line 5; figure 1; example 1 * ----- | 1,3-12 | INV. B01L3/04 B01D59/44 F27B17/02 G01N30/88 H01J49/04 |
| Y | JP 2007 150124 A (KOYO THERMO SYS KK) 14 June 2007 (2007-06-14) * paragraphs [0002], [0005], [0006], [0014] * ----- | 1,3-12 | |
| Y | JP 04 104054 A (NIHON ANARISUTO KK) 6 April 1992 (1992-04-06) * page 1; figure 3 * ----- | 1 | |
| A | EP 1 430 944 A1 (FORSCHUNGSZENTRUM JUELICH GMBH [DE]) 23 June 2004 (2004-06-23) * the whole document * ----- | 1-12 | |
| A | DE 199 06 732 A1 (FORSCHUNGSZENTRUM JUELICH GMBH [DE]) 24 August 2000 (2000-08-24) * column 2, lines 34-43; figure 1 * ----- | 1 | TECHNICAL FIELDS SEARCHED (IPC) B01L B01D F27B G01N H01J |
| A | WO 2006/108391 A2 (FORSCHUNGSZENTRUM JUELICH GMBH [DE]; AGROISOLAB GMBH [DE]; HEKATECH G) 19 October 2006 (2006-10-19) * the whole document * ----- -/-- | 1-12 | |

The present search report has been drawn up for all claims

| Place of search | Date of completion of the search | Examiner |
|---|---|---|
| The Hague | 7 September 2009 | Tiede, Ralph |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

Europäisches
Patentamt
European
Patent Office
Office européen
des brevets

# EUROPEAN SEARCH REPORT

Application Number

EP 09 42 5129

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DUEBGEN R; POPP G: "GLASARTIGER KOHLENSTOFF SIGRADUR - EIN WERKSTOFF FUER CHEMIE UND TECHNIK//GLASSY CARBON SIGRADUR - A MATERIAL FOR CHEMISTRY AND TECHNOLOGY" ZEITSCHRIFT FUER WERKSTOFFTECHNIK - JOURNAL OF MATERIALSTECHNOLOGY. MATERIALS TECHNOLOGY AND TESTING, VCH, WEINHEIM, DE, vol. 15, 1 January 1984 (1984-01-01), pages 331-338, XP009024352 ISSN: 0049-8688 * the whole document * | 1-12 | |
| A | KE-ZHI L; FENG-TAO L; HE-JUN L; XUE-TAO S; YONG-GANG H: "Oxidation protection of carbon/carbon composites with SiC/indialite coating for intermediate temperatures" JOURNAL OF THE EUROPEAN CERAMIC SOCIETY, ELSEVIER SCIENCE PUBLISHERS, BARKING, ESSEX, GB, vol. 29, no. 9, 17 December 2008 (2008-12-17), pages 1803-1807, XP026053057 ISSN: 0955-2219 [retrieved on 2008-12-17] * the whole document * | 1-12 | |
| A | JOSHI A; LEE J S: "Coatings with particulate dispersions for high temperature oxidation protection of carbon and C/C composites" COMPOSITES, IPC BUSINESS PRESS LTD. HAYWARDS HEATH, GB, vol. 28, no. 2, 1 January 1997 (1997-01-01), pages 181-189, XP004117740 ISSN: 0010-4361 * the whole document * | 1-12 | TECHNICAL FIELDS SEARCHED (IPC) |

-/--

The present search report has been drawn up for all claims

| Place of search | Date of completion of the search | Examiner |
|---|---|---|
| The Hague | 7 September 2009 | Tiede, Ralph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 09 42 5129

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WESTWOOD M E; ET AL: "OXIDATION PROTECTION FOR CARBON FIBRE COMPOSITES" JOURNAL OF MATERIALS SCIENCE, SPRINGER / BUSINESS MEDIA, DORDRECHT, NL, vol. 31, no. 6, 15 March 1996 (1996-03-15), pages 1389-1397, XP009045447 ISSN: 0022-2461 * the whole document * ----- | 1-12 | |

**TECHNICAL FIELDS SEARCHED (IPC)**

The present search report has been drawn up for all claims

| Place of search | Date of completion of the search | Examiner |
|---|---|---|
| The Hague | 7 September 2009 | Tiede, Ralph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...............................................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 09 42 5129

This annex lists the patent family members relating to the patent documents cited in the above-mentioned European search report.
The members are as contained in the European Patent Office EDP file on
The European Patent Office is in no way liable for these particulars which are merely given for the purpose of information.

07-09-2009

| Patent document cited in search report | | Publication date | Patent family member(s) | | Publication date |
|---|---|---|---|---|---|
| DE 19816348 | C1 | 05-08-1999 | AU<br>WO | 3521999 A<br>9952127 A2 | 25-10-1999<br>14-10-1999 |
| JP 2007150124 | A | 14-06-2007 | NONE | | |
| JP 4104054 | A | 06-04-1992 | JP | 2891524 B2 | 17-05-1999 |
| EP 1430944 | A1 | 23-06-2004 | DE | 10260119 A1 | 15-07-2004 |
| DE 19906732 | A1 | 24-08-2000 | AT<br>WO<br>EP<br>US | 263617 T<br>0049623 A2<br>1154837 A2<br>2005008543 A1 | 15-04-2004<br>24-08-2000<br>21-11-2001<br>13-01-2005 |
| WO 2006108391 | A2 | 19-10-2006 | DE 102005017192 A1 | | 19-10-2006 |

EPO FORM P0459

For more details about this annex : see Official Journal of the European Patent Office, No. 12/82

**EP 2 236 208 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2031387 A
- DE 4333208 A1
- GB 2273561 A

**Non-patent literature cited in the description**

- **Werner et al.** *Rapid Communication in Mass Spectrometry,* 1999, vol. 13, 1237-1241